# EUROPEAN PATENT APPLICATION

(11) **EP 4 800 806 A1**
(43) Date of publication of application: **02.09.2026**
(21) Application number: 25160650.5
(22) Date of filing: 27.02.2025
(51) Int. Cl.: H01M 10/613, H01M 10/625, H01M 10/6567, H01M 50/204, H01M 50/293, H01M 50/383, H01M 50/682

(54) **BATTERY SYSTEM AND VEHICLE INCLUDING THE BATTERY SYSTEM**

(71) Applicant: Samsung SDI Co., Ltd., Yongin-si, Gyeonggi-do 17084 (KR)
(72) Inventor: Reinprecht, Wolfgang, 8144 Attendorf (AT); Bagyinszki, Andras, 8141 Unterpremstatten (AT); Berk Yilmaz, Eser, 8020 Graz (AT); Kleindienst, Wolfgang, 8010 Graz (AT); Urbanitsch, Michael, 8074 Raaba-Grambach (AT)
(74) Representative: Gulde & Partner

(57) **Abstract**

The present disclosure refers to a battery system (10) including a battery housing (11) including a top cover (20), a plurality of battery cells (12) accommodated within the battery housing (11), wherein each of the battery cells (12) includes a venting side (13) with a venting exit (14) for allowing a venting gas stream (V) to exit the battery cells (12) in case of a thermal runaway (TR), the venting sides (13) facing the top cover (20), at least one pipe (30, 30') filled with a liquid and extending across the battery cells (12) at their venting sides (13), wherein the at least one pipe (30, 30') is configured to rupture and expel the liquid when exerted to the venting gas stream (V), a plurality of cell spacers (40) alternatingly stacked with the battery cells (12), each cell spacer (40) being adapted to absorb the liquid expelled by the at least one pipe (30, 30').

## Description

### Field of the Disclosure

The present invention relates to a battery system better suited to handle a thermal runaway of one or more of its battery cells. Further, the present invention relates to a vehicle including the battery system.

### Technological Background

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is an electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SoC) or depth of discharge (DoD) to indicate the charge level of the battery cell, state of health (SoH; a variously-defined measurement of the remaining capacity of the battery cell as a percent of the original capacity), state of power (SoP; the amount of power available for a defined time interval given the current power usage, temperature and other conditions), state of safety (SoS), maximum charge current as a charge current limit (CCL), maximum discharge current as a discharge current limit (DCL), and internal impedance of a cell (to determine open circuit voltage).

The BMS may be centralized such that a single controller is connected to the battery cells through a multitude of wires. In other examples, the BMS may be also distributed, with a BMS board installed at each battery cell with just a single communication cable between the battery cell and a controller. In yet other examples, the BMS may have a modular construction including a few controllers, each handling a certain number of battery cells, while communicating between the controllers. Centralized BMSs are most economical, but are least expandable, and are plagued by a multitude of wires. Distributed BMSs are the most expensive, but are simplest to install, and offer the cleanest assembly. Modular BMSs provide a compromise of the features and problems of the other two topologies.

The BMS may protect the battery pack from operating outside its safe operating area. Operation outside the safe operating area may be indicated by overcurrent, over-voltage (during charging), over-temperature, under-temperature, overpressure, and ground fault or leakage current detection. The BMS may prevent the battery from operating outside its safe operating parameter by including an internal switch (e.g., a relay or solid-state device) that opens if the battery is operated outside its safe operating parameters, by requesting the devices to which the battery is connected to reduce or even terminate using the battery, and by actively controlling the environment, such as through heaters, fans, air conditioning or liquid cooling.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the battery cells is required.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through a venting opening of a case of the battery cell into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A venting concept for a battery cell in the related art is to let the venting gas stream discharged by the battery cell(s) expand into a battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells.

Also, electrical cell insulations of an affected battery cell, for example plastic foils, may be damaged by the thermal runaway. That is, if one or more battery cells overheat the cell insulations may melt. This can result in a low electrical resistance between parts or components with high differential voltage (>20V), causing internal short circuits and arcing. In the event of thermal runaway of a single battery cell, the environment heats up due to the exothermic reaction of the battery cell. The energy released is constrained by the size and chemistry of the battery cell, necessitating the implementation of adequate thermal insulation to prevent thermal propagation.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery system is provided including a battery housing including a top cover, a plurality of battery cells accommodated within the battery housing, wherein each of the battery cells includes a venting side with a venting exit for allowing a venting gas stream to exit the battery cells in case of a thermal runaway, the venting sides facing the top cover, at least one pipe filled with a liquid and extending across the battery cells at their venting sides, wherein the at least one pipe is configured to rupture and expel the liquid when exerted to the venting gas stream, a plurality of cell spacers alternatingly stacked with the battery cells, each cell spacer being adapted to absorb the liquid expelled by the at least one pipe.

According to an aspect of the disclosure, the at least one pipe is attached to an inner surface of the top cover and extends above the venting exits.

According to an aspect of the disclosure, the at least one pipe extends next to the venting exits.

According to an aspect of the disclosure, the at least one pipe includes a first pipe and a second pipe, wherein the first pipe extends next to a first side of the venting exits and wherein the second pipe extends next to a second side of the venting exits, the second side being opposite the first side.

According to an aspect of the disclosure, the cell spacers include a reinforcement fiber material in a matrix material.

According to an aspect of the disclosure, the reinforcement fiber material includes glass fibers and/or wherein the matrix material includes an epoxy resin and/or a thermoplastic.

According to an aspect of the disclosure, the cell spacers include an open-pore foam.

According to an aspect of the disclosure, each of the cell spacers includes receiving spaces formed inside a body of the cell spacer for receiving and accumulating the liquid expelled by the at least one pipe.

According to an aspect of the disclosure, the receiving spaces include channels extending from a top of the cell spacer into the body of the cell spacer.

According to an aspect of the disclosure, the receiving spaces further include one or more accumulating chamber inside the body of the cell spacer into which the channels lead for accumulating the liquid expelled by the at least one pipe.

According to an aspect of the disclosure, the receiving spaces are formed as cut-outs in the cell spacers.

According to an aspect of the disclosure, the at least one pipe includes predetermined breaking sections arranged opposite the venting exits.

According to an aspect of the disclosure, the predetermined breaking sections have a smaller wall thickness than adjacent sections of the pipe.

According to an aspect of the disclosure, the battery system further includes a busbar protection cover covering electrical connections of the battery cells.

According to an aspect of the disclosure, the battery system further includes a pressure generating unit for generating a pressure onto the liquid.

According to an aspect of the disclosure, the pressure generating unit includes an airbag and/or a pyro fuse.

According to an aspect of the disclosure, the battery system further includes a supply system to supply the liquid to the pipe.

According to an aspect of the disclosure, the supply system is part of a cooling system of the battery system and wherein the liquid is a coolant used by the cooling system to cool the battery cells during regular operation of the battery system.

According to an aspect of the disclosure, the supply system is adapted to supply the coolant from both ends of the pipe.

Yet another aspect of the present disclosure refers to an electric vehicle including any one of the battery systems according to any one of the aspects of the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic top view on a battery system according to a first embodiment.
FIG. 2 illustrates a schematic cross-sectional view on the battery system of FIG. 1.
FIG. 3 illustrates a schematic top view on a battery system according to a second embodiment.
FIG. 4 illustrates a schematic top view on a part of the battery system of FIG. 3.
FIGS. 5A to 5C illustrate three different embodiments of a cell spacer of the present disclosure shown in a schematic cross-sectional view.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to an aspect of the present disclosure, a battery system is provided. The battery system includes a battery housing with a top cover and a plurality of battery cells accommodated inside the housing. The battery housing may include a housing base encasing the battery cells from five sides, wherein the top cover encases the battery cells from the sixth side. The battery cells may be interconnected via electrical connecting means, for example, busbars, contacting the respective electrode terminals of the battery cells to form one or more battery modules/battery packs. The battery cells are arranged to form one or more battery packs, wherein in a battery pack the battery cells are electrical interconnected, for example, in a series and/or in parallel as explained above. Multiple of these battery packs may form a battery module. Two or more of the battery packs may be stacked to form cell stacks. The battery cells may, for example, be prismatic, pouch type or cylindrical cells.

Each of the battery cells includes a venting exit at a venting side of the battery cell, which is preferably the terminal side of the battery cells, the venting exits allowing a venting gas stream to escape the battery cells during a thermal runaway. Venting valves may be provided at the venting exits. The venting sides of the battery cells face the top cover of the battery housing. In other words, the top cover is arranged opposite the venting sides of the battery cells thereby covering the battery cells. When assembling the battery system, the battery cells may be placed into the housing base of the battery housing and, subsequently, the top cover may be placed onto the top of the housing base so that the battery cells are completely encased by the battery housing.

The battery system includes at least one a pipe that extends across the battery cells at their venting sides. In other words, the at least one pipe stretches from battery cell to battery cell along the venting sides. The at least one pipe may, for example, extend (directly) above the venting exits or alongside/next to the venting exits as explained in more detail below. The at least one pipe may, for example, be made of plastics or a metal such as aluminum. The at least one pipe is filled with a liquid, wherein the liquid may be still or in movement, may for example be pumped through the at least one pipe. The liquid inside the at least one pipe may be under pressure. The liquid being under pressure may mean that the liquid has or is exerted to a pressure higher than the pressure inside the battery housing, e.g. higher than atmospheric pressure. The liquid may be any liquid suitable to cool down the affected battery cell and the venting gas stream, for example water, a water solution or a liquid chemical. The liquid may be constantly under pressure or may be exerted to a pressure when rupturing, for example by a pressure generating unit of the battery system.

Further, the battery system includes a plurality of cell spacers alternatingly stacked with the battery cells, each cell spacer being adapted to absorb the liquid expelled by the at least one pipe. A cell stack is formed by the battery cells and the cell spacers in-between. The cell spacers are configured to receive the liquid. Each of the cell spacers may include or consist of a soaking material which soaks up the liquid in its pores. Alternatively, or additionally, receiving spaces such as channels and/or chambers may be formed in the cell spacers to allow for the absorption, as explained in more detail below.

According to the invention, the at least one pipe is configured to rupture when exerted to the venting gas stream. That is, the pipe ruptures when a venting gas stream exits through the venting exit of one of the battery cells and hits the at least one pipe disposed at the venting side. The pipe may thus rupture at a section opposite or close to the venting exit from which the venting gas stream is exhausted. In other words, a section of the pipe forms an opening or opens up when one of the underlying battery cells undergoes a thermal runaway and ejects the venting gas stream. The pipe may rupture due to the heat flow of the venting gas stream damaging the pipe. For example, the hot gases and particles of the venting gas stream may burn or melt the pipe. As a consequence, the liquid is expelled from, or sprays out of, the ruptured section of the pipe onto the underlying, affected battery cell(s) thereby cooling the same and also cooling the ejected venting gas stream. As a result of the venting gas stream cooling down, the temperature of the venting gas stream decreases significantly, thereby averting potential melting of battery components and preventing arcing and thermal propagation. Because the liquid is under pressure or exerted to a pressure when rupturing, the liquid is expelled rapidly and will quickly disperse or spray out from the ruptured pipe which improves the cooling effect. In other words, the pipe forms a sprinkler pipe. Further, the liquid expelled by the pipes is absorbed at least in part by the cell spacers which leads to additional cooling, for example of the main sides of the affected battery cell.

The enhancement of the proposed battery system thus involves implementing adequate cooling or extinguishing measures to counteract the rise in temperature of the battery cell affected by a thermal runaway caused by an exothermic reaction inside the battery cell. The quantity of energy required to cool down the battery cell can be calculated based on the chemical and electrical characteristics of an individual cell, thereby determining the necessary cooling measures for the system. In the event of thermal runaway, the high-temperature gases and particles will rupture the at least one pipe, releasing its contents onto the hot area of the affected battery cell to facilitate cooling. If the energy provided by the coolant exceeds the heat generated during thermal runaway, the system may be able to return to its initial temperature. Additionally, by cooling the venting gas stream, the overall temperature of the venting gas stream is sufficiently lowered to prevent the melting of battery components, thereby averting arcing and thermal propagation.

According to an embodiment, the at least one pipe is attached to the inside of the top cover and extends above the venting exits of the battery cells. In other words, the at least one pipe extends along the battery cells opposite their venting exits. The at least one pipe may be attached to the inner surface of the top cover via mounting means, for example via bolts or screws, or integrally, for example via a welded connection. The at least one pipe may, for example, be made of plastics or a metal such as aluminum. Also, the top cover may be made of plastics or a metal such as aluminum. The at least one pipe may thus rupture at a section (directly) opposite the venting exit from which the venting gas stream is exhausted. As a consequence, the liquid is expelled from, or sprays out of, the ruptured section of the pipe directly onto the underlying, affected battery cells thereby cooling the same and also cooling the ejected venting gas stream. Further, as the at least one pipe is attached or fixed to the top cover, the at least one pipe can be installed without additional work when installing the top cover which facilitates the assembly process. That is, the at least one pipe may be installed by simply placing the top cover onto the housing based of the battery housing after having inserted the battery cells.

According to an embodiment, the at least one pipe extends next to, or alongside, the battery cells. That is, the at least one pipe may extend not directly opposite the venting exits but rather adjacent to the venting exits. The at least one pipe may be attached to cell stack, e.g. to the venting sides of the battery cells, via mounting means, for example via bolts or screws, or integrally, for example via a welded connection. The at least one pipe may, for example, be made of plastics or a metal such as aluminum. When the at least one pipe ruptures in case of a thermal runaway, the liquid may be sprayed sideways and below towards the venting exit from which the venting gas stream exits. This may achieve the above-described cooling effect. That is, the liquid may cool the top of the affected battery cells, the venting gas stream and, by being absorbed by the cell spacers adjacent to the affected battery cell, also the main lateral sides of the affected battery cells.

According to an embodiment, the at least one pipe includes a first pipe and a second pipe, wherein the first pipe extends next to or along a first side of the venting exits and wherein the second pipe extends next to or along a second side of the venting exits, the second side being opposite the first side. Both these pipes are configured to rupture and expel the liquid when exerted to the venting gas stream. Providing two pipes on opposite sides of the venting exits allows for an improved cooling, even more so when distributed on opposite sides of the venting exits.

According to an embodiment, the cell spacers include a reinforcement fiber material, e.g. a fiber mat, in a matrix material. The reinforcement fiber material may include glass fibers. The matrix material may include an epoxy resin and/or a thermoplastic. During a thermal runaway the affected battery cell may first degas and subsequently heat up until the matrix material of the adjacent cell spacer burns away while the fiber material remains in place. The remaining fiber material of the adjacent cell spacer may soak up the liquid and thereby cool the affected battery cell. This effect may be facilitated by using a matrix material with a lower heat resistance compared to an epoxy resin, such as thermoplastic materials. Such may provide for a sufficient absorption of the liquid expelled by the at least one pipe.

According to an embodiment, the cell spacers include an open-pore foam, for example silicone foam. Such may provide for a sufficient absorption of the liquid expelled by the at least one pipe.

According to an embodiment, each of the cell spacers includes receiving spaces formed inside the body of the cell spacer for receiving and/or accumulating the liquid expelled by the at least one pipe. The receiving spaces may include channels extending from a top of the cell spacer into the body of the cell spacer. Additionally, the receiving spaces may include one or more accumulating chamber inside the body of the cell spacer into which the channels lead for accumulating the liquid expelled by the at least one pipe. According to an embodiment, the receiving spaces are formed as cut-outs in the cell spacers. The cell spacers, whether made of a soaking material or a non-soaking material, may be designed with these receiving spaces, e.g. via cut outs. These receiving spaces may include or consist of channels and/or funnels that extend from the top of the cell spacers, where liquid gathers on the cell stack, all the way down into the middle or even bottom of the cell spacers. The channels may lead to one or more chambers for liquid accumulation. Both the channels and the chamber can extend to the bottom of the spacer, ensuring that even the lower sections of the neighboring battery cells receive cooling. Such may provide for a sufficient absorption of the liquid expelled by the at least one pipe.

According to an embodiment, the at least one pipe includes predetermined breaking sections arranged opposite the venting exits. The predetermined breaking sections rupture when exerted to the venting gas stream exhausted by an underlying/adjacent battery cell that undergoes a thermal runaway. In other words, the predetermined breaking sections are configured or adapted to create an opening when exposed to the heat flow of the venting gas stream. The spray medium within the pipeline is then dispersed onto the affected battery cell undergoing through this opening. According to an embodiment, the predetermined breaking sections have a smaller wall thickness than adjacent sections of the at least one pipe. Such a smaller wall thickness may provide in a simple and effective manner that the at least one pipe breaks or ruptures at the predetermined breaking sections.

According to an embodiment, the at least one pipe is made of plastic. The at least one pipe when made of plastic may melt when exerted to the venting gas stream and may thus rupture at sections close to the venting exit that exhausts the venting gas stream. When made of plastics, the at least one pipe may rupture even when not provided with predetermined breaking sections because of a low melting point of the plastic. Making the at least one pipe of plastics may thus be simple and effective.

According to an embodiment, the at least one pipe is made of aluminum. The at least one pipe when made of aluminum may melt when exerted to the venting gas stream and may thus rupture at sections close to the venting exit that exhausts the venting gas stream. When made of aluminum, the at least one pipe may rupture even when not provided with predetermined breaking sections because of the melting point of aluminum is lower than the temperature of the venting gas stream which may exceed 1000°C. However, it may be advantageous to provide the aluminum pipe with the predetermined breaking sections to reduce the time needed for the venting gas stream to melt the aluminum pipe as this will decrease the time until rupture of the pipe. The aluminum pipe may be integrally attached/connected to the top cover, for example welded to the top cover, wherein the top cover may be made of steel or aluminum.

According to an embodiment, the top cover is made of aluminum. Also, the other parts of the battery housing, such as the housing base, may be made of aluminum. In an embodiment, both the top cover and the at least one pipe are made of aluminum. The aluminum pipe may be integrally attached to the aluminum cover, for example welded, to facilitate heat conduction between the at least one pipe and the top cover. If both the at least one pipe and the top cover are made of aluminum, such an integral connection may provide for a good heat conduction between the at least one pipe and the top cover. Thus, the at least one pipe may cool the top cover during a thermal runaway.

According to an embodiment, the at least one pipe is integrally attached to the top cover. For example, the at least one pipe may be welded to the top cover to achieve such an integral connection. For example, both the at least one pipe and the top cover may be made of aluminum. That is, the aluminum pipe can be integrally attached to the aluminum cover, e.g. welded. Such an integral connection may facilitate heat conduction between the at least one pipe and the top cover. The integral connection provides for the at least one pipe to be attached to the top cover in a heat conducting manner. Thus, the at least one pipe may cool the top cover during a thermal runaway. Thereby, the risk that the top cover melts and/or causes damage outside the battery system is reduced.

According to an embodiment, the at least one pipe meanders along a plurality of rows of battery cells. In other words, the at least one pipe may include multiple straight sections and one or more curved sections interconnecting the straight sections, wherein the straight sections extend above the venting sides of the battery cells. Thus, a single pipe may extend along multiple rows of battery cells, for example in multiple battery packs.

According to an embodiment, the battery system further includes a busbar protection cover covering electrical connections of the battery cells. The busbar protection cover covers electrical connections of the battery cells such as electrode terminals and busbars interconnecting the electrode terminals of neighboring battery cells. The busbar protection cover protects the electrical connections from the venting gas stream, e.g. depositing particles, and also from the liquid so that electrical short circuits are prevented. The busbar protection cover may thus be adapted to withstand the high temperatures of the venting gas stream and/or to be waterproof.

According to an embodiment, the battery system further includes a pressure generating unit for generating a pressure onto the liquid. The pressure generating unit may actively or passively provide the pressure. The pressure generating unit may, for example, include an airbag and/or a pyro fuse which may trigger when the at least one pipe ruptures (for example because of a pressure drop) and may thus rapidly expel the liquid from the ruptured section of the pipe. Alternatively, the pressure generating unit may constantly keep the liquid under pressure even during regular operation of the battery system, i.e. even when no thermal runaway occurs. Such a pressure generating unit may, for example, be realized by a liquid supply system that supplies the liquid to the at least one pipe or pumps the liquid through the pipe.

In one embodiment, the at least one pipe may be closed at both ends and the liquid may thus be confined to the at least one pipe. According to another embodiment, the battery system includes a supply system to supply the liquid to the at least one pipe and pump the liquid through the at least one pipe. The supply system may include a pump for supplying the liquid to the at least one pipe and pumping the liquid through the pipe. The supply system may exert a pressure onto the at least one pipe, i.e. may serve as a pressure generating unit as explained above.

According to an embodiment, the supply system is part of a cooling system of the battery system and wherein the liquid is a coolant used by the cooling system to cool the battery cells during regular operation of the battery system. The cooling system may, for example, cool the battery cells during regular operation by pumping the coolant through a cooling plate at the bottom side of the battery cells. According to the present embodiment, this cooling system may provide the liquid for cooling and extinguishing the venting gas stream during a thermal runaway as well which is efficient. Also, the cooling system may thereby cool the top cover during regular operation (in case the at least one pipe is attached to the top cover) which further facilitates the cool down of the venting gas stream in case of a thermal runaway as parts of the venting gas stream hitting the top cover are cooled down by transferring heat to the cooled-down top cover. According to an embodiment, the supply system is adapted to supply the coolant from both ends of the pipe. This may enable a continuous cooling of the top cover even in case the at least one pipe is ruptured.

Yet another embodiment pertains to an electric vehicle including any one of the battery systems as explained above.

### Specific Embodiments

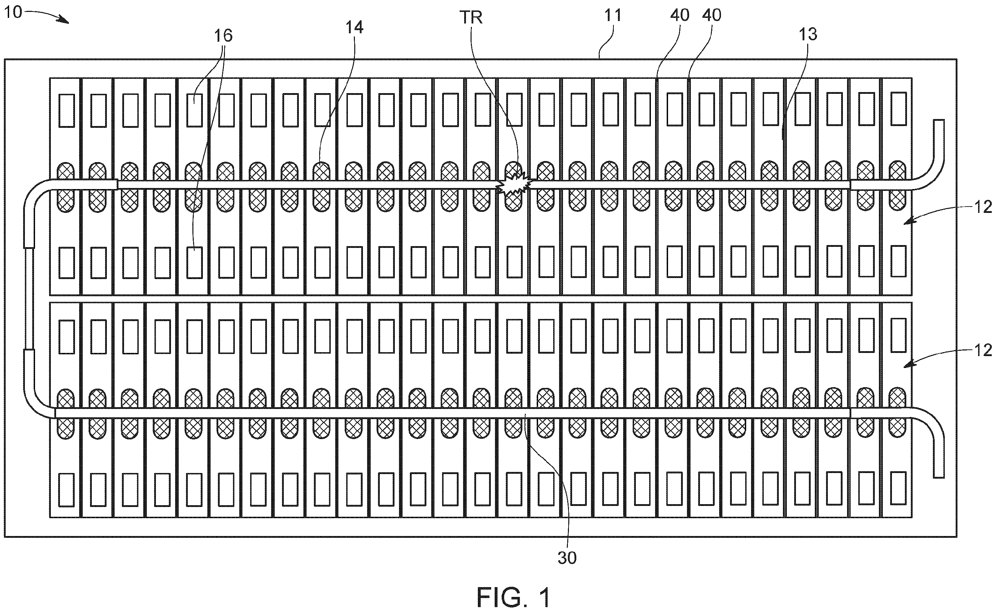

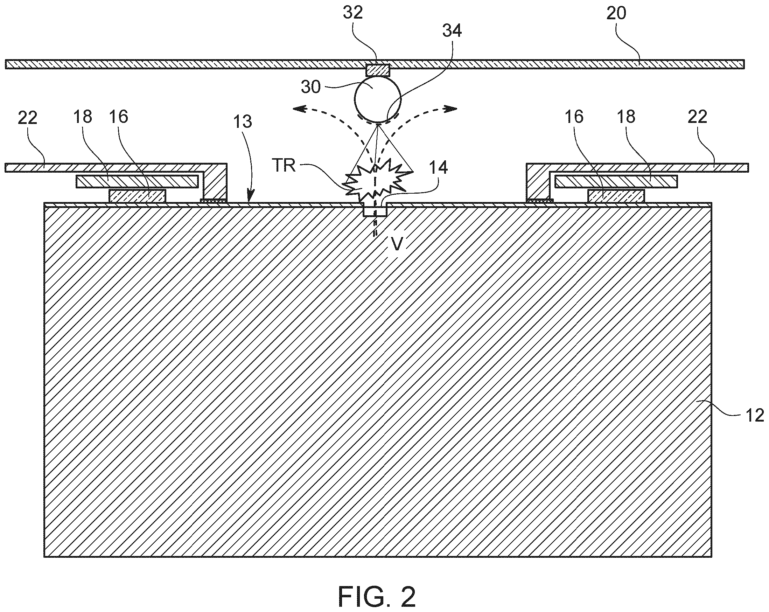

FIG. 1 is a top view illustrating a battery system 10 according to a first embodiment and including a battery housing 11 accommodating a plurality of battery cells 12 and cell spacers 40 alternatingly stacked with the battery cells 12. The battery housing 11 includes a top cover 20 which is not shown in FIG. 1 but in FIG. 2. The battery cells 12 are arranged in two rows. The battery cells 12 include electrode terminals 16 at their top side, wherein the electrode terminals 16 of neighboring battery cells 12 are interconnected via busbars 18, see FIG. 2. Thereby, one or more battery packs may be formed.

Each of the battery cells 12 includes a venting side 13 with a venting exit 14, wherein venting valves (not shown) may be placed inside the venting exits 14. In case one of the battery cells 12 is affected by a thermal runaway TR, a venting gas stream V may exit the affected battery cell 12 through the venting exit 14 as illustrated in FIG. 2. As can also be seen in FIG. 2, the battery cells 12 face the top cover 20 with their venting sides 13.

The battery system 10 includes a pipe 30 which meanders along the two rows of battery cells 12 at the top side of the battery cells 12 above the venting exits 14. The pipe 30 is attached to an inner surface of the top cover 20 via an integral connection 32. For example, the pipe 30 may be welded to the top cover 20. The pipe 30 and the top cover 20 may be made of aluminum.

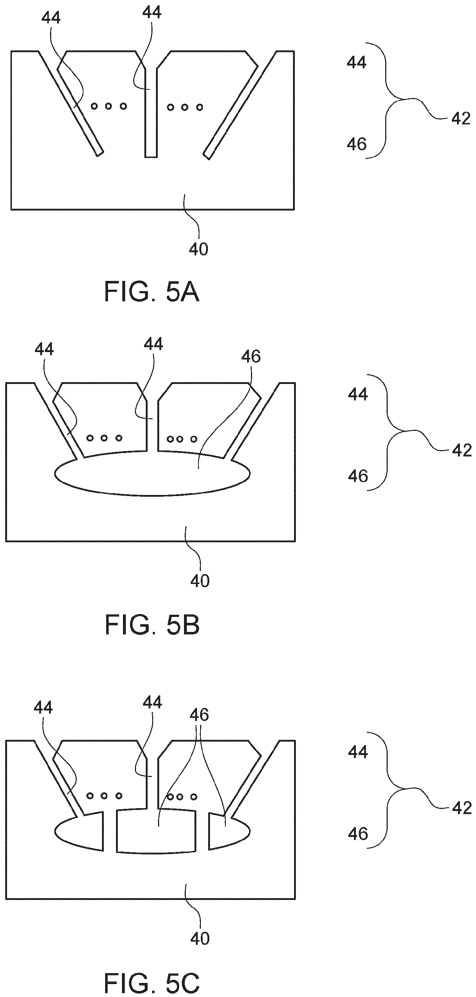

The pipe 30 contains a liquid and is configured to rupture and expel the liquid when exerted to the venting gas stream V. That is, the pipe 30 will burst open when damaged by the heat of the venting gas stream V so that the liquid is spilled or sprayed onto the affected battery cell 12 and the venting gas stream V thereby cooling both. For example, the hot gases and particles of the venting gas stream may melt the aluminum pipe. Thus, the temperature of the venting gas stream V decreases significantly, thereby averting any potential melting of battery components and preventing arcing and thermal propagation. The cell spacers 40 are each adapted to absorb the liquid expelled by the pipe 30. The cell spacers 40 may include or consist of a soaking material which soaks up the liquid in its pores. Alternatively or additionally, receiving spaces 42 such as channels 44 and chambers 46 may be formed in the cell spacers 40 to allow for the absorption, as explained below with respect to FIGS. 5A to 5C. Thus, the liquid expelled by the pipe 30 is absorbed at least in part by the cell spacers 40 which leads to additional cooling of the main/lateral sides of the affected battery cell 12.

Further, as the pipe 30 is integrally connected or attached to the top cover 20, the pipe 30 can be installed in a simple manner without additional work needed when installing the top cover 20 which facilitates the assembly process.

The battery system 10 includes a busbar protection cover 22 covering the electrode terminals 16 and busbars 18, which are electrical connections of the battery cells 12 to protect them from the venting gas stream V as well as from the liquid expelled from the pipe 30. This way electrical short circuits may be prevented.

To facilitate rupturing at the intended section, the pipe 30 may include predetermined breaking sections 34 at sections of the pipe 30 opposite the venting exits 14. These sections of the pipe 30 opposite the venting exits 14 may have a smaller wall thickness than adjacent sections of the pipe 30 so as to achieve the predetermined breaking sections 34.

The liquid may, for example, be pumped through the pipe 30 via a cooling system (not shown) of the battery system 10 which may otherwise serve to cool the battery cells 12 during regular operation. The liquid may thus be a coolant. The cooling system may serve as a pressure generating unit/means for generating a pressure onto the liquid so that the liquid is expelled rapidly, and possibly in a cone, when the pipe 30 ruptures.

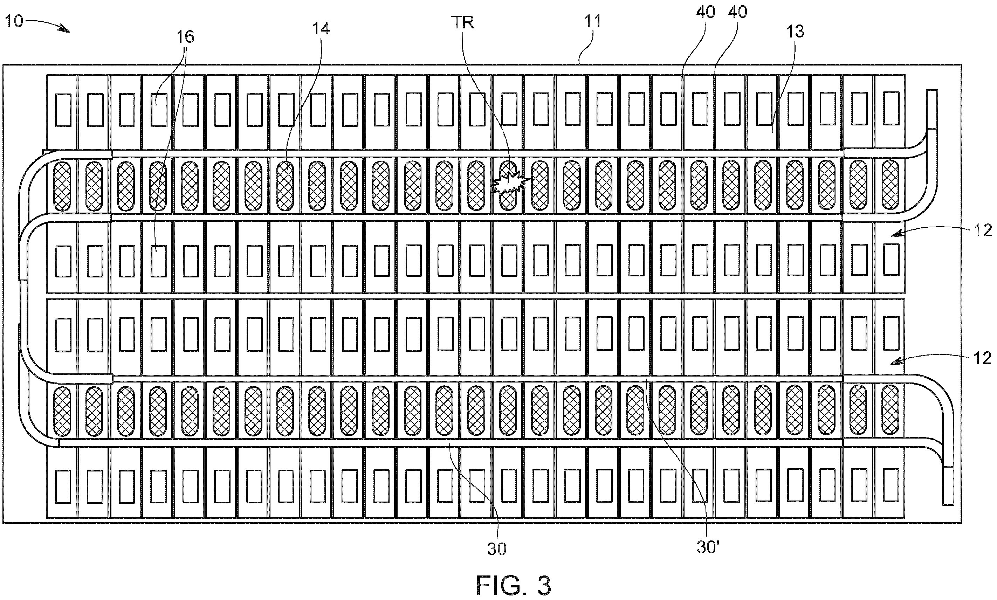

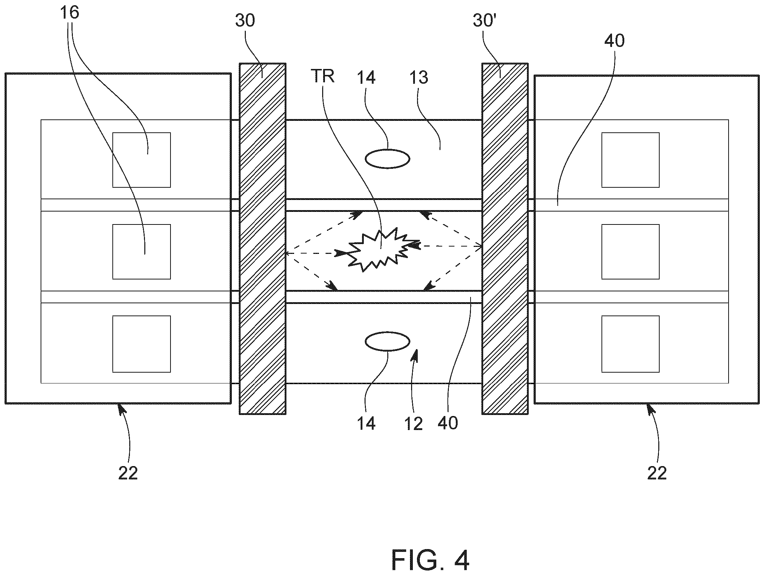

FIG. 3 and FIG. 4 relate to a second embodiment of a battery system 10 which differs from the first embodiment in that it includes two pipes 30, 30'. Both pipes 30, 30' are filled with a liquid and disposed at the venting side 13, a first pipe 30 extends next to or along a first side of the venting exits 14 and wherein a second pipe 30' next to or extends along a second side of the venting exits 14, the second side being opposite the first side.

The pipes 30, 30' are configured to rupture and expel the liquid when exerted to the venting gas stream V as explained above. The cell spacers 40 are each adapted to absorb the liquid expelled by the pipes 30, 30'. The cell spacers 40 may include or consist of a soaking material which soaks up the liquid in its pores. Alternatively, or additionally, receiving spaces 42 such as channels 44 and chambers 46 may be formed in the cell spacers 40 to allow for the absorption, as shown in FIGS. 5A to 5C.

In FIGS. 5A to 5C, three embodiments of a cell spacer 40 are shown, wherein in FIG. 5A, the cell spacer 40 includes channels 44 extending from a top of the cell spacer 40 into a body of the cell spacer 40. In FIG. 5B, the cell spacer 40 additionally includes a common accumulating chamber 46 inside the body of the cell spacer 40 into which the channels 44 lead. In FIG. 5C, the cell spacer 40 includes not a single common accumulating chamber but instead separate accumulating chambers 46 for each of the channels 44.

Similar to the first embodiment, the pipes 30, 30' contain a liquid and are configured to rupture and expel the liquid when exerted to the venting gas stream V. That is, the pipes 30, 30' will burst open when damaged by the heat of the venting gas stream V so that the liquid is spilled or sprayed onto the affected battery cell 12 and the venting gas stream V thereby cooling both. Thus, the temperature of the venting gas stream V decreases significantly, thereby averting any potential melting of battery components and preventing arcing and thermal propagation.

Further, the liquid expelled by the pipes 30, 30' is absorbed at least in part by the cell spacers 40 which leads to additional cooling of the main/lateral sides of the affected battery cell 12.

### Reference signs

- 10: battery system
- 11: battery housing
- 12: battery cells
- 13: venting side/top side
- 14: venting exits
- 16: electrode terminals
- 18: busbars
- 20: top cover
- 22: busbar protection cover
- 30: pipe
- 30': pipe
- 32: integral connection
- 34: predetermined breaking sections
- 40: cell spacers
- 42: receiving spaces
- 44: channels
- 46: chambers
- TR: thermal runaway
- V: venting gas stream

## Claims

1. A battery system (10), comprising
a battery housing (11) comprising a top cover (20),
a plurality of battery cells (12) accommodated within the battery housing (11), wherein each of the battery cells (12) comprises a venting side (13) with a venting exit (14) for allowing a venting gas stream (V) to exit the battery cells (12) in case of a thermal runaway (TR), the venting sides (13) facing the top cover (20),
at least one pipe (30, 30') filled with a liquid and extending across the battery cells (12) at their venting sides (13), wherein the at least one pipe (30, 30') is configured to rupture and expel the liquid when exerted to the venting gas stream (V),
a plurality of cell spacers (40) alternatingly stacked with the battery cells (12), each cell spacer (40) being adapted to absorb the liquid expelled by the at least one pipe (30, 30').

2. The battery system (10) as claimed in claim 1, wherein the at least one pipe (30) is attached to an inner surface of the top cover (20) and extends above the venting exits (14).

3. The battery system (10) as claimed in claim 1, wherein the at least one pipe (30, 30') extends next to the venting exits (14).

4. The battery system (10) as claimed in claim 3, wherein the at least one pipe comprises a first pipe (30) and a second pipe (30'), wherein the first pipe (30) extends next to a first side of the venting exits (14) and wherein the second pipe (30') extends next to a second side of the venting exits (14), the second side being opposite the first side.

5. The battery system (10) as claimed in any one of the preceding claims, wherein the cell spacers (40) comprise a reinforcement fiber material in a matrix material.

6. The battery system (10) as claimed in claim 5, wherein the reinforcement fiber material comprises glass fibers and/or wherein the matrix material comprises an epoxy resin and/or a thermoplastic.

7. The battery system (10) as claimed in any one of the preceding claims, wherein the cell spacers (40) comprise an open-pore foam.

8. The battery system (10) as claimed in any of the preceding claims, wherein each of the cell spacers (40) comprises receiving spaces (42) formed inside a body of the cell spacer (40) for receiving and accumulating the liquid expelled by the at least one pipe (30, 30').

9. The battery system (10) as claimed in claim 8, wherein the receiving spaces (42) comprise channels (44) extending from a top of the cell spacer into the body of the cell spacer (40).

10. The battery system (10) as claimed in claim 8 or 9, wherein the receiving spaces (42) further comprise one or more accumulating chamber (46) inside the body of the cell spacer (40) into which the channels (44) lead for accumulating the liquid expelled by the at least one pipe (30, 30').

11. The battery system (10) as claimed in any one of claims 8 to 10, wherein the receiving spaces (42) are formed as cut-outs in the cell spacers (40).

12. The battery system (10) as claimed in any one of the preceding claims, wherein the at least one pipe (30) comprises predetermined breaking sections (34) arranged opposite the venting exits (14).

13. The battery system (10) as claimed in claim 12, wherein the predetermined breaking sections (34) have a smaller wall thickness than adjacent sections of the pipe (30).

14. The battery system (10) as claimed in any one of the preceding claims, further comprising a busbar protection cover (22) covering electrical connections (16, 18) of the battery cells (12).

15. The battery system (10) as claimed in any one of the preceding claims, further comprising a pressure generating unit for generating a pressure onto the liquid.

16. The battery system (10) as claimed in claim 15, wherein the pressure generating unit comprises an airbag and/or a pyro fuse.

17. The battery system (10) as claimed in any one of the preceding claims, further comprising a supply system to supply the liquid to the pipe (30).

18. The battery system (10) as claimed in claim 17, wherein the supply system is part of a cooling system of the battery system (10) and wherein the liquid is a coolant used by the cooling system to cool the battery cells (12) during regular operation of the battery system (10).

19. The battery system (10) as claimed in claim 13, wherein the supply system is adapted to supply the coolant from both ends of the pipe (30).

20. An electric vehicle comprising the battery system (10) as claimed in any one of the preceding claims.
